# EUROPEAN PATENT SPECIFICATION

(11) **EP 3 286 046 B1**
(45) Date of publication and mention of the grant of the patent: **07.07.2021**
(21) Application number: 16718985.1
(22) Date of filing: 21.04.2016
(51) Int. Cl.: B60S 3/04

(54) **FLUID DELIVERY SYSTEM FOR A VEHICLE WASH SYSTEM**
FLÜSSIGKEITSAUSGABESYSTEM FÜR EIN FAHRZEUGWASCHSYSTEM
SYSTÈME DE DISTRIBUTION DE FLUIDE POUR UN SYSTÈME DE LAVAGE DE VÉHICULES

(30) Priority: 21.04.2015 US 201562150373 P
(43) Date of publication of application: 28.02.2018
(73) Proprietor: Washme Properties, LLC, Northville, MI 48167 (US)
(72) Inventor: BELANGER, Michael, J., Northville, MI 48167 (US); PRATER, Curtis, S., Warren, MI 48093 (US); TURNER, Barry, S., Novi, MI 48375 (US)
(74) Representative: Monzón de la Flor, Luis Miguel
(86) International application number: PCT/US2016/028672
(87) International publication number: WO 2016/172356

(56) References cited:
- WO-A1-01/85506
- CN-A- 103 587 505
- JP-A- 2009 023 570
- US-A1- 2010 186 778
- US-A1- 2011 126 857
- US-A1- 2013 239 992
- US-B1- 6 372 053

## Description

### CROSS-REFERENCE TO RELATED APPLICATIONS

The present application claims priority to U.S. Provisional Patent Application Serial No. 62/150,373, filed April 21, 2015, and U.S. Utility Patent Application No. 15/135,220, filed April 21, 2016.

### TECHNICAL FIELD

The present disclosure relates generally to a fluid delivery system for a vehicle wash system. More particularly, the present disclosure relates to a fluid delivery system that controls the flow of fluid being emitted from one or more fluid delivery sources to optimize the wash process.

### BACKGROUND OF THE DISCLOSURE

Current vehicle wash facilities employ individual nozzles that emit fluid for use in the vehicle wash process. These nozzles are typically configured to emit fluid such as water, soap and/or chemical onto a vehicle exterior surface as part of the vehicle wash process. The fluid emitted onto the vehicle exterior serves to wet the vehicle and/or work with rotary brushes that contact the vehicle exterior to assist with the removal of dirt therefrom. The fluid can also be emitted onto the rotary brushes directly to assist with the vehicle cleaning process.

With these existing processes, the fluid is emitted from these nozzles in a constant stream such that the rate at which the fluid is emitted does not change. This results in a significant amount of water loss and results in the use of significantly more water than is needed for a given wash process.
(i)] In the state of the art are known the following documents:
   - US2010186778 which discloses an industrial vehicle wash system comprises a wash area receiving the vehicle and a separate control area receiving an operator. A plurality of wash modules are supported in the wash are to direct respective jets of wash fluid onto the vehicle. This document discloses the preambles of the independent claims.
   - WO 01/85506 discloses a vehicle wash system having a single pumping unit with variable speeds. This document also discloses the preambles of the independent claims.
   - CN103587505 which discloses A water-saving pollution-free automatic car washing system utilizing air.
   - US2013239992 which discloses a method of controlling wash equipment in an automated vehicle wash system having a conveyor includes, measuring one or more contours of a vehicle as the vehicle moves thorough an entry area of the automated vehicle wash system on the conveyor.
   - US2011126857 which discloses A vehicle wash system having a wash bay including a plurality of pivotable robotic wash monitors disposed therein.
   - JP20090230570 which discloses a car washing machine allowing a worker to ensure the predetermined range of application on the surface of a target vehicle to be washed irrespective of a distance from the surface of the target vehicle to be washed, and capable of applying water or a diluted liquid agent accurately.
   - US6372053 discloses a variable pressure spray type vehicle laundry apparatus

### SUMMARY OF THE DISCLOSURE

It is therefore an aspect of the present disclosure to provide a fluid delivery system including one or more fluid delivery orifices where the fluid delivery system is configured to vary the rate at which fluid is emitted from the one or more fluid delivery orifices during a wash process.

It is another aspect of the present disclosure to provide a fluid delivery system including one or more fluid delivery orifices where the fluid delivery system is configured to pulse fluid through the one or more orifices such that the flow rate is intermittently on and off.

It is still another aspect of the present disclosure to provide a fluid delivery system for a vehicle wash system that provides improved cleaning capabilities.

It is yet another aspect of the present disclosure to provide a fluid delivery system for a vehicle wash system that can yield significant water and energy savings.

It is still a further aspect of the present disclosure to provide a fluid delivery system for a vehicle wash system that can improve efficiency of the wash process and can yield cost savings.

It is still yet another aspect of the present disclosure to provide a fluid delivery system for a vehicle wash process that allows the flow of fluid to be controlled and modified to account for varying wash conditions.

In accordance with the above and the other aspects of the present disclosure an improved vehicle wash system is provided as shown and described. The vehicle wash system includes a vehicle treatment component and at least one fluid delivery orifice associated with the vehicle treatment component. The fluid delivery orifice is in communication with a source of fluid and is configured to emit a steam of fluid therefrom. The system includes a controller in communication with the at least one fluid delivery orifice, with the controller being configured to vary the flow of fluid from the source of fluid through the at least one fluid delivery orifice.

### BRIEF DESCRIPTION OF THE DRAWINGS

Other aspects of the present disclosure will be readily appreciated, as the same becomes better understood by reference to the following detailed description when considered in connection with the accompanying drawings wherein:
FIG 1 is a schematic illustration of a fluid delivery system for a vehicle wash process in accordance with an aspect of the disclosure;
FIG 2 is a schematic illustration of a fluid delivery system for a vehicle wash process in accordance with another aspect of the present disclosure;
FIG 3 is a schematic illustration of a fluid delivery system for a vehicle wash process in accordance with still another aspect of the present disclosure; and
FIG 4 is a schematic illustration of a fluid delivery system for a vehicle wash process in accordance with yet another aspect of the present disclosure.

### DETAILED DESCRIPTION OF THE DISCLOSURE

The present disclosure relates generally to a fluid delivery system for use as part of a vehicle wash system. The fluid delivery system may be incorporated into any suitable vehicle wash system, such as a conveyor or in-bay wash system. It will be appreciated that the disclosed fluid delivery system may be employed in connection with a variety of other applications or systems, including self-service wash systems. It will also be appreciated that the disclosed fluid delivery system may also have a variety of different configurations and may operate in a variety of other suitable ways.

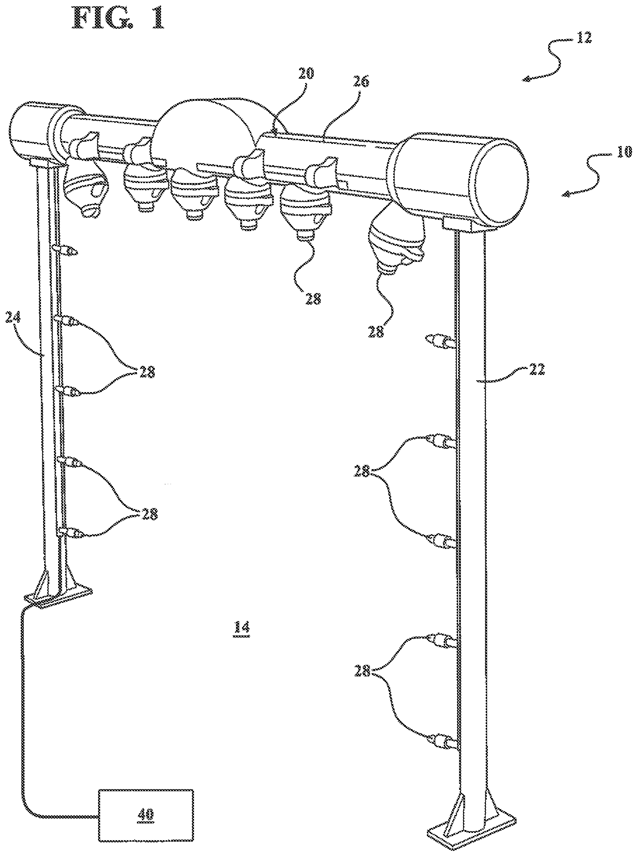

According to an exemplary aspect, with reference to FIG 1, a fluid delivery system 10 may be employed in a vehicle wash facility and may be utilized as part of a vehicle wash system. The fluid delivery system 10 may include one or more vehicle treatment components 12 that are disposed adjacent a vehicle treatment area 14. According to an aspect, an exemplary vehicle treatment component 12 may be embodied as a rinse arch 20, having a pair of ground engaging legs 22, 24 and an overhead portion 26 that spans the vehicle treatment area 14. According to a farther aspect, the rinse arch 20 may include a plurality of fluid emitting nozzles 28 that are configured to direct fluid onto a vehicle exterior while it is disposed in the vehicle treatment area 14. The fluid delivery nozzles 28 may be disposed on each of the pair of ground engaging legs 22, 24 as well as the overhead portion 26. The fluid delivery nozzles 28 may be in communication with a source of fluid. The source of fluid may be water, soap, or a chemical or a variety of other suitable types of fluids. It will also be appreciated mat fluid can be emitted through any type of orifice.

It will be appreciated that the fluid delivery nozzles 28 may be disposed in a variety of other suitable locations on the rinse arch 20. Additionally, more or less fluid delivery nozzles 28 may be employed. It will also be appreciated that the fluid delivery nozzles 28 can be employed on a variety of other vehicle wash components, including as discussed herein.

According to an aspect, the fluid delivery nozzles 28 may be configured such that they can be toggled between a first state and a second state. According to this aspect, the first state may be an "on" state in which fluid is permitted to pass through the fluid delivery nozzles 28. According to this aspect, the second state may be an "off<*>state in which fluid is prevented from passing through the fluid delivery nozzles 28. According to one aspect, each of the nozzles 28 may be configured with a closure mechanism that can be actuated to allow the nozzles to be toggled between the on state and the off state. According to an aspect, the closure mechanism can be a solenoid valve, including a relay and a potentiometer, such that the mechanism for changing states is disposed on the equipment itself. Additionally, a self- delayed on/off timer can also be employed. It will also be appreciated that other suitable closure mechanism that allow for local mechanical actuation of the states may be employed. According to another aspect, actuating the on and off states of the fluid delivery nozzles 28 during a vehicle wash process can allow the flow of fluid onto the vehicle exterior to be pulsed on and off intermittently. Put another way, mis functionality allows for pulsing fluid through the nozzles in a controlled manner during the vehicle wash process such that a constant stream of fluid is not being applied to a vehicle exterior.

According to a still further aspect, the fluid delivery system 10 can include a central controller 40, which is in communication with each of the fluid delivery nozzles 28. The central controller 40 can allow the states of each of the nozzles 28 to be controlled and changed remotely instead of locally at the equipment itself. This allows for control of the entire wash system in a uniform fashion such mat nozzles on a multitude of different vehicle treatment components can be controlled. According to an aspect, the controller 40 can include a processor that employs programmable logic, such as may be embodied in hardware, firmware or software so as to control fluid flow through the fluid delivery nozzle 28 by way of a programmed algorithm.

It is known that fluid nozzles employed in conventional wash processes, generally emit fluid at a rate of approximately 1 gallon per minute. According to an aspect of the present disclosure, the fluid delivery nozzles 28 can be sized to emit fluid in a higher quantity than is utilized in current vehicle wash systems. For example, the fluid delivery nozzles 28 can be configured to emit fluid at a rate of approximately 2 gallons per minute. Increasing the rate at which the fluid is emitted from the fluid delivery nozzles 28 can provide significant benefits. For example, emitting a larger mass or volume of fluid from the nozzles 28 can ensure mat more fluid reaches the vehicle exterior as less atomization will occur. Additionally, the resultant large droplets of fluid emitted from the fluid delivery nozzles 28 can travel a longer distance. This allows more fluid force to be applied to the vehicle exterior surface, which can provide improved cleaning capabilities. Additionally, the application of larger volumes of fluid minimizes the impact of temperature changes as can occur in warm areas, such as Arizona where higher temperatures can cause significant fluid evaporation, which can negatively impact the wash process. This allows for an optimum wash to be achieved regardless of weather conditions.

According to another aspect, the fluid delivery nozzles 28 can be configured with a closure mechanism that allows the fluid delivery nozzles to be operated in on and off states. In the on state, the fluid delivery nozzles 28 can emit a larger volume of fluid. The larger volume can impact the vehicle exterior at a larger force, which can assist in removing dirt that would otherwise not be removed. In the off state, the fluid delivery nozzles 28 can be prevented from emitting fluid. By this configuration, the same amount of fluid can ultimately be emitted from the nozzles over a given period of time. According to another aspect, the fluid delivery nozzles 28 can be controlled such that a smaller volume of fluid is ultimately utilized during a vehicle wash process, despite the fact that the fluid is emitted at a greater volume when the fluid delivery nozzles are in the on state. This can result in significant fluid savings. According to still another aspect, the fluid delivery nozzles 28 can be controlled to emit a greater volume of fluid as desired or needed. According to a further aspect, in the on state, the fluid emitted from the fluid delivery nozzles 28 can be at a conventional flow rate of 1 gallon per minute such that when it is in the off state significant fluid and energy savings can be achieved.

It will be appreciated that varying flow rates for the on state can be employed.

It will further be appreciated that the period between states may be varied. According to an aspect, the time period for the on state may be the same as the time period for the off state. For example, the time periods for each state could be 1 second or .5 seconds or a variety of other suitable periods. It will also be appreciated that the time periods for each state could be unequal with one state having a longer time period then the other. It will further be appreciated that the intervals for each of the states can vary during a single wash process to account for changing conditions within the wash.

According to still another aspect, the controller 40 can be configured with control logic such that the states of the fluid delivery nozzles 28 could correspond to different flow rates instead of on and off states, as discussed above. According to this aspect, this could allow the flow of fluid through the nozzles 28 to be varied such that different amounts of fluid are applied at different times or to account for different conditions. For example, one state could correspond to a front of a vehicle and another state could correspond to a back of a vehicle. According to this example, the nozzles 28 could be configured to emit fluid at one rate (a first state or mode of operation) onto the front of a vehicle and at a second rate (a second state or mode of operation) onto the back of a vehicle. This would enable the use of the same arch and nozzle configuration to deliver different amounts of water and chemical where the wash operator wanted it with respect to the vehicle. According to another example, the flow rates or modes of operation could be varied based on a predetermined interval. It will also be appreciated that more modes or states could also be employed. Additionally, varying the rate at which fluid flows through the nozzles 28 can allow for accommodation of changing dirt conditions. Allowing for the sophisticated control of fluid flow as needed by way of a software algorithm, can allow for improved cleaning of the vehicle exterior as well as increased energy savings and cost savings by reducing energy and fluid use when not needed.

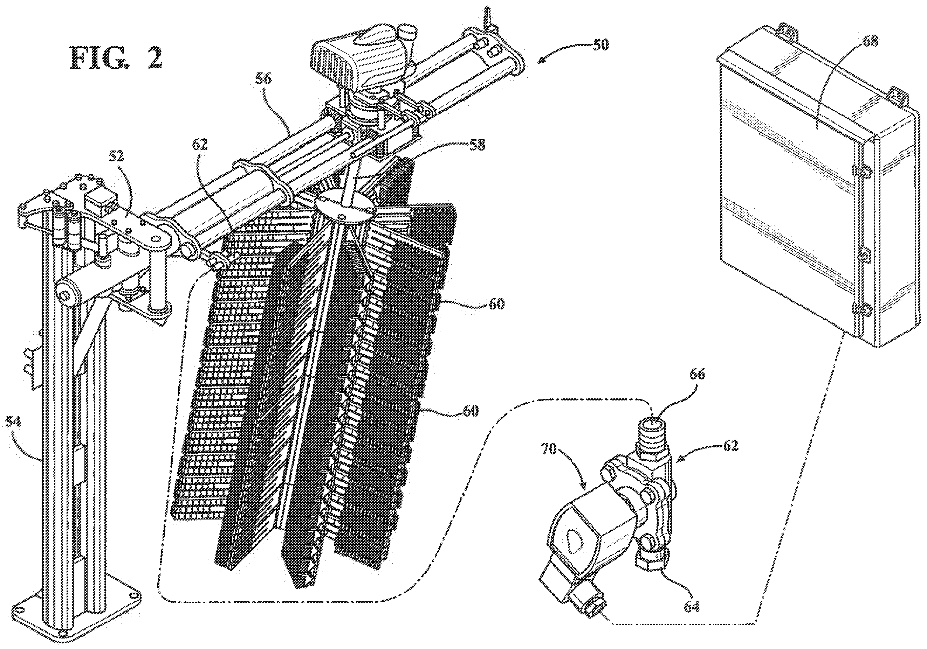

According to another aspect and with reference to FIG 2, the vehicle wash component could be configured as a wrap-around brush SO, which includes a frame portion 52 having a vertical support 54 and a horizontal arm portion 56. The horizontal arm portion 56 can support a shaft portion 58 rotatable about a vertical axis of rotation. The shaft portion 58 can be in communication with a plurality of wash media elements 60 that are configured to contact a vehicle exterior and effectuate the washing process. The wash media elements 60 may be conventional cloth wash media elements. According to another aspect, the wash media elements 60 could be self-supporting media elements as described in Applicant's U.S. Patent No. 8,990,993, entitled "Vehicle Wash Component".

According to an aspect, one or more fluid nozzles 62 could be disposed on the horizontal arm portion 56 to communicate with the wash media elements 60 in order to emit fluid directly thereon for use in the vehicle wash process. According to this aspect, the fluid may be a water and chemical mix that can be used for treating the vehicle exterior. According to another aspect, the plurality of fluid nozzles 62 could be configured to emit fluid onto the wash media elements 60 in a pulsed fashion such that the fluid is emitted intermittently as opposed to being emitted in a constant stream in a manner discussed above. This can result in a savings of both water and chemical of up to as much as 50° o and greater. As discussed above, the nozzles 62 can be configured to emit larger droplets of fluid, which provides benefits. Additionally, the nozzles 62 can be controlled such that they are cycled between different states, such as enabled and disabled states, on and off states, or states associated with different flow rates. The nozzles 62 can be controlled by a mechanical closure mechanism. Alternatively, the nozzles 62 can be controlled by more sophisticated control logic, such as by a central controller that includes software/firmware for effectuating control of fluid emission through the fluid delivery nozzles 62, as is discussed above.

According to an aspect as shown, the fluid nozzles 62 can be configured as solenoid valves with an inlet 64 in communication with a fluid supply line and configured to receive fluid from a fluid source. The fluid nozzles 62 can include a fluid outlet 66 that is configured to emit fluid onto the wash media elements 60. According to another aspect, the fluid nozzles 62 can communicate with a controller 68 which controls the state of the fluid nozzles. For example, the controller 68 can send a signal to the fluid nozzles 62 to vary their state from an on state to an off state or from a low flow state to a high flow state in the manner discussed above.

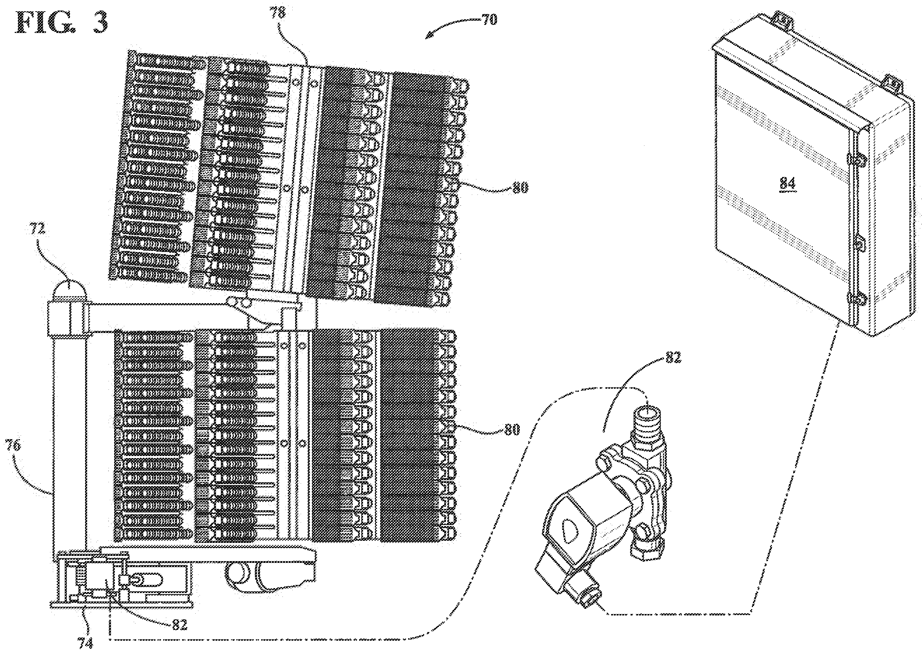

With reference to FIG 3, according to another aspect, the vehicle wash component can be configured as a rotary brush 70 with an axis of rotation. The rotary brush 70 can include a frame portion 72 with a base portion 74 and a vertical upright portion 76. The rotary brush 70 can include a shaft portion 78, which is in communication with a plurality of wash media elements 80 that are configured to contact a vehicle exterior to effectuate the cleaning process. The wash media elements 80 may be conventional cloth media elements. According to another aspect, they may be formed of a foam material such that they are self-supporting along their length. As shown, one or more fluid nozzles 82 can be disposed on the frame portion 72 to emit fluid directly onto a vehicle exterior or the wash media elements. It will be appreciated that the nozzles can operate in a manner or be configured as set forth above. The fluid nozzles 82 may be in communication with a controller 84 that can vary the flow of fluid through the nozzles in a manner as discussed above.

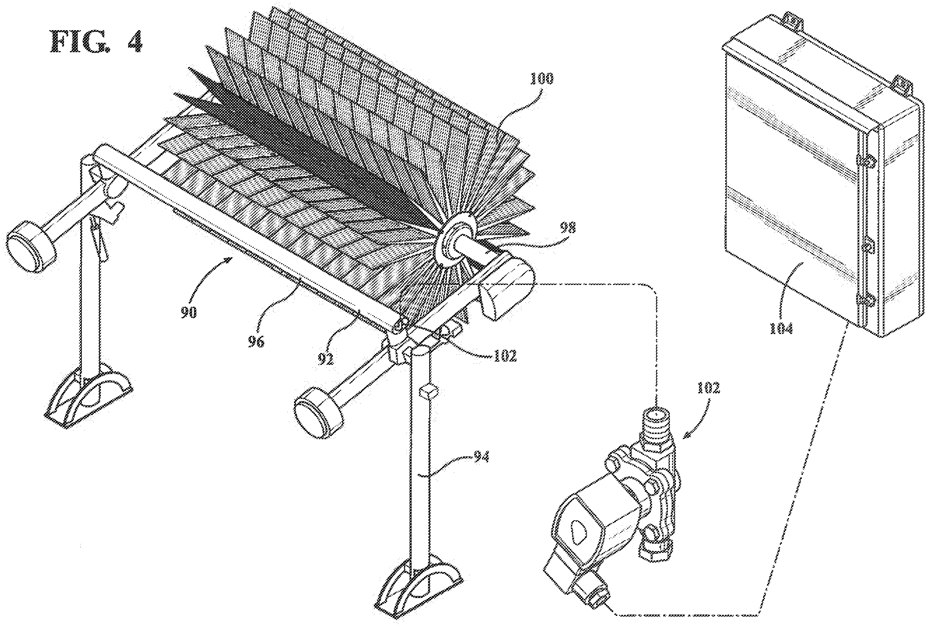

According to yet another aspect and with reference to FIG 4, the vehicle wash component can be configured as a top wheel 90 with a horizontal axis of rotation. The top wheel 90 can include a frame portion 92 with a vertical upright portion 94 and an overhead portion 96. The top wheel 90 can include a shaft portion 98, which is in communication with a plurality of wash media elements 100 that are configured to contact a vehicle exterior to effectuate the cleaning process. The wash media elements 100 may be conventional cloth media elements. According to another aspect, the media elements may be formed of a foam material such that they are self-supporting along their length. As shown, one or more fluid nozzles 102 can be disposed on the frame portion 72 to emit fluid directly onto a vehicle exterior or onto the wash media elements. It will be appreciated that the nozzles 102 can operate in a manner or be configured as set forth above. The fluid nozzles 102 may be in communication with a controller 104 that can vary the flow of fluid through the nozzles in a manner as discussed above.

According to a still further aspect, the fluid delivery system 10 may be configured to vary the flow of fluid through the nozzles 28, 62, 82, 102 when a vehicle is disposed adjacent the vehicle treatment component in a position where it can be cleaned or where fluid can be emitted directly onto the vehicle. According to another aspect, the fluid delivery system can allow for varying the flow of fluid through the nozzles while the vehicle treatment component is engaging the vehicle exterior. For example, while wash media elements of a vehicle wash brush are engaging the vehicle exterior, the fluid flow through one or more nozzles can be varied. This is contrasted from turning the entire component off, such as when no vehicle is disposed adjacent the component for treatment

According yet another aspect, the system could include a selection option that can allow the wash system to be operated in either a normal mode or a water savings mode. A first flow rate can be associated with the normal mode. A second flow rate can be associated with the water savings mode. According to an aspect, the second flow rate can be a lower flow rate than the first flow rate such that the system can use less water in the water savings mode. According to a still further aspect, in the water savings mode, the controller can vary the flow rate of water through the nozzles within a single wash process. According to an aspect, this can be accomplished by pulsing fluid through the nozzles by intermittent application of fluid to the vehicle in order that the system uses less water or fluid in the water savings mode than in the normal mode. This can also be accomplished by emitting fluid through the nozzles at different flow rates during a single wash process.

According to an aspect, the nozzles can operate in the water savings mode to use less water based on either a time variable or an amount of water emitted variable. For example, the nozzles can be controlled to emit less fluid over a given time in the water savings mode. According to an aspect, the nozzles could include a pressure regulator valve that can vary the pressure at the nozzles based on an applied voltage. For example, a minimum voltage can be associated with one flow rate and a maximum voltage can be associated with a second flow rate. According to another aspect, this can be accomplished by a control system in communication with a hydraulic proportional valve. It wilt be appreciated that the flow rate can be varied in a variety of different ways. It will also be appreciated that a variety of other types of valves could be employed for these purposes.

According to a still further aspect, instead of varying the flow rate through the nozzles, the time period in which the nozzles emit fluid could varied to effectuate a reduction in water usage. This can be accomplished by a control system mat pulses the fluid through the nozzles in an intermittent fashion by alternatively allowing or restricting flow therethrough.

According to an aspect, the system can allow for selective implementation of the water savings mode. For example, the system can include a green button labeled "water savings" disposed adjacent an entrance of die wash system mat allows users to elect to have a reduced amount of water used as part of the wash process for their vehicle. This can be an attractive feature for user's concerned about green or energy savings initiatives. Once the button is activated, a signal can be sent to the controller to operate the wash in a water savings mode. It will be appreciated that vehicle operators could be permitted to implement the water savings mode in a variety of other suitable ways.

According to a further aspect, the water savings mode can be selectively implemented by a wash operator based on need. For example, if the system or wash operator detects a relatively clean vehicle, the water savings mode can be implemented. This can be done manually by a wash operator upon visual inspection of the vehicle by interacting with the control system. Alternatively, this can be accomplished automatically based on feedback from a sensor or the like reflecting a relative cleanliness of a vehicle exterior that is suitable for implementation of the water savings mode. It will be appreciated that a variety of detection mechanism can be employed to provide information about the controller.

According to yet another aspect, the system can be set up such that the default operation could be a water savings mode. According to an aspect, a brown button can be presented to a vehicle operator that allows them to select to have a greater amount of water applied to their vehicle as part of the wash process. In this event, a vehicle operator can actuate the brown button (i.e., "dirty vehicle" button) and a signal can be sent to the controller to implement the dirty vehicle mode, which can result in increased water usage for that vehicle.

The dirty vehicle mode can also be implemented by a vehicle operator manually upon inspection of the vehicle. According to another aspect, the system can implement the dirty vehicle mode automatically based on feedback from a sensor or the like reflecting a dirty vehicle requiring a higher pressure water being emitted from the nozzles to ensure removal of dirt form the vehicle.

While the dirty vehicle mode can result in a variance in water flow rate or in time duration of water application, it can result in a variance of other factors. For example, upon implementation of the dirty vehicle mode (or the water savings mode), the controller can vary the speed of operation of the conveyor. Upon implementation of a dirty vehicle, the controller can slow the conveyor speed such that the vehicle wash process for a particular vehicle can take a longer period of time. This can result in the vehicle being exposed to the vehicle treatment components and fluid application for an increased period of time. For example, a typical conveyor can operate at a rate of 120 vehicle washes per hour. Upon application of the dirty vehicle mode, the conveyor speed can be operated at a rate of 80 vehicle washes per hour.

In operation, according to this aspect, the conveyor speed can operate at a reduced speed while the designated vehicle passes through the wash process. Upon the designated vehicle exiting the wash process, the controller can automatically return the conveyor to its normal mode speed. According to an aspect, in the dirty vehicle mode where the controller reduces the conveyor speed, the controller can also vary the flow rate (or time of flow) through the nozzles to match the conveyor speed.

This can allow the system to selectively apply different modes on an individual vehicle basis. It will be appreciated that the system could include a variety of different modes that can be implemented by the controller based on a variety of different factors. It will also be appreciated that the controller can implement various modes by varying a combination of factors such as a combination of two or more of time, flow rate, and conveyor speed.

Note that not all of the activities described above in the general description or the examples are required, that a portion of a specific activity may not be required, and that one or more further activities may be performed in addition to those described. Still further, the orders in which activities are listed are not necessarily the order in which they are performed.

The specification and illustrations of the embodiments described herein are intended to provide a general understanding of the structure of the various embodiments. The specification and illustrations are not intended to serve as an exhaustive and comprehensive description of all of the elements and features of apparatus and systems that use the structures or methods described herein. Many other embodiments may be apparent to those of skill in the art upon reviewing the disclosure. Other embodiments may be used and derived from the disclosure, such that a structural substitution, logical substitution, or another change may be made without departing from the scope of the disclosure. Accordingly, the disclosure is to be regarded as illustrative rather than restrictive.

Certain features are, for clarity, described herein in the context of separate embodiments, may also be provided in combination in a single embodiment. Conversely, various features that are, for brevity, described in the context of a single embodiment, may also be provided separately or in any sub combination. Further, reference to values stated in ranges includes each and every value within that range.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

## Claims

1. A vehicle wash system, comprising:
a vehicle treatment component configured to be disposed adjacent a vehicle treatment area for treating a vehicle exterior;
at least one fluid delivery orifice associated with the vehicle treatment component and in communication with a source of fluid, a controller (40) in communication with the at least one fluid delivery orifice and configured to operate the at least one fluid delivery orifice a first state of operation with a first flow rate and a second state of operation with a second flow rate, which is different than the first flow rate;
**characterized in that** the controller (40) is configured to selectively vary fluid flow through the at least one fluid delivery orifice between the first and second states of operation while a vehicle is disposed in the vehicle treatment area adjacent the vehicle treatment component during a single wash process of the vehicle;
and **in that** the at least one delivery orifice is able to vary the rate of fluid between a predetermined maximum flow rate and a selectable second flow rate less than the predetermined maximum flow rate during a single wash process and
wherein the controller (40) is configured to selectively implement the first state of operation of the at least one fluid delivery orifice for a first duration of time and a second state of operation of the at least one fluid delivery orifice for a second duration of time a plurality of times during a single wash process of a vehicle.

2. The vehicle wash system of claim 1, wherein the fluid delivery orifice is a nozzle (28).

3. The vehicle wash system of claim 1, wherein the at least one fluid delivery orifice is configured such that the first flow rate is greater the second flow rate.

4. The vehicle wash system of claim 1, wherein the at least one fluid delivery orifice is configured such that one of the first flow rate or the second flow rate is zero such that fluid can be intermittently applied to the vehicle exterior in a pulsed fashion.

5. The vehicle wash system of claim 1, wherein the first duration is equal to the second duration.

6. The vehicle wash system of claim 1, wherein the first duration is greater than the second duration.

7. The vehicle wash system of claim 1, wherein the controller (40) is configured to detect a location of a vehicle within the vehicle treatment area and wherein the controller (40) is further configured to implement the first state of operation and the second state of operation based on the location of the vehicle.

8. The vehicle wash system of claim 1, further comprising a plurality of fluid delivery orifices and wherein the fluid delivery orifices can each include a solenoid valve that varies the fluid flow through the fluid delivery orifices.

9. A vehicle wash system, comprising:
a vehicle treatment component configured to be disposed adjacent a vehicle treatment area;
at least one fluid delivery orifice associated with the vehicle treatment component and configured to emit a stream of fluid therefrom, the at least one fluid delivery orifice in communication with a source of fluid; and a controller (40) in communication with the at least one fluid delivery orifice, the controller configured to selectively vary a flow rate of fluid flowing through the at least one fluid delivery orifice while a vehicle is disposed adjacent the vehicle treatment area; **characterized in that**
the controller (40) is configured to vary the flow rate through the fluid delivery orifice based on a detected location of a vehicle with respect to the vehicle treatment area.
wherein the controller is further configured to vary a rate of fluid flow through the at least one fluid delivery orifice between a maximum predetermined flow rate and a selectable second flow rate less than the predetermined maximum flow rate during a single wash process.

10. The vehicle wash system of claim 9, wherein the controller (40) is configured to vary the flow rate of the fluid stream through the at least one orifice by emitting fluid at a first flow rate during a first time period and then emitting fluid at a second flow rate during a second time period.

11. The vehicle wash system of claim 10, wherein the first time period is greater than the second time period such that fluid flow through the fluid delivery orifice can be pulsed.

12. The vehicle wash system of claim 9, wherein one of the first flow rate or the second flow rate is zero.

13. The vehicle wash system of claim 9, wherein the controller (40) is configured to emit fluid through the at least one fluid delivery orifice at a first rate for application to a front portion of the vehicle and at a second rate for application to a rear portion of the vehicle;
wherein the second rate is greater than the first rate.

14. A method of controlling application of a vehicle treatment fluid as part of a vehicle wash process compromising:
disposing a vehicle treatment device adjacent a vehicle treatment area;
communicating a pressurized vehicle treatment fluid to the vehicle treatment device;
providing at least one fluid delivery orifice having a predetermined maximum flow rate and in communication with the pressurized fluid;
**characterised in that** the method further comprises :
associating a valve with the at least one fluid delivery orifice; and varying a rate of fluid flow through the at least one fluid delivery orifice between the maximum predetermined flow rate and a selectable second flow rate less than the predetermined maximum flow rate during a single wash process.

15. The method of claim 14, further comprising:
emitting fluid through the at least one fluid delivery orifice at the maximum flow rate for a first time period;
emitting fluid through the at least one fluid delivery orifice at the second flow rate for a second time period; and
wherein the first time period is equal to the second time period.

## Patentansprüche

1. Fahrzeugwaschsystem, umfassend:
- eine Fahrzeugbehandlungskomponente, die so konfiguriert ist, dass sie angrenzend an einen Fahrzeugbehandlungsbereich zur Behandlung eines Fahrzeugäußeren angeordnet wird;
- mindestens eine Fluidabgabeöffnung, die der Fahrzeugbehandlungskomponente zugeordnet ist und mit einer Fluidquelle in Verbindung steht, eine Steuerung (40), die mit der mindestens einen Fluidabgabeöffnung in Verbindung steht und so konfiguriert ist, dass sie die mindestens eine Fluidabgabeöffnung in einem ersten Betriebszustand mit einer ersten Durchflussrate und in einem zweiten Betriebszustand mit einer zweiten Durchflussrate betreibt, die sich von der ersten Durchflussrate unterscheidet;
**dadurch gekennzeichnet, dass**
- die Steuerung (40) so konfiguriert ist, dass sie den Fluidstrom durch die mindestens eine Fluidabgabeöffnung selektiv zwischen dem ersten und dem zweiten Betriebszustand variiert, während sich ein Fahrzeug während eines einzelnen Waschvorgangs des Fahrzeugs in dem Fahrzeugbehandlungsbereich angrenzend an die Fahrzeugbehandlungskomponente befindet;
und dadurch, dass
- die mindestens eine Abgabeöffnung in der Lage ist, die Fluidrate zwischen einer vorbestimmten maximalen Durchflussrate und einer wählbaren zweiten Durchflussrate, die kleiner als die vorbestimmte maximale Durchflussrate ist, während eines einzelnen Waschvorgangs zu variieren,
und
- wobei die Steuerung (40) so konfiguriert ist, dass sie den ersten Betriebszustand der mindestens einen Fluidabgabeöffnung für eine erste Zeitdauer und einen zweiten Betriebszustand der mindestens einen Fluidabgabeöffnung für eine zweite Zeitdauer während eines einzelnen Waschvorgangs eines Fahrzeugs eine Vielzahl von Malen selektiv implementiert.

2. Fahrzeugwaschsystem nach Anspruch 1, wobei die Fluidabgabeöffnung eine Düse (28) ist.

3. Fahrzeugwaschsystem nach Anspruch 1, wobei die mindestens eine Fluidabgabeöffnung so konfiguriert ist, dass die erste Durchflussrate größer als die zweite Durchflussrate ist.

4. Fahrzeugwaschsystem nach Anspruch 1, wobei die mindestens eine Fluidabgabeöffnung so konfiguriert ist, dass entweder die erste Durchflussrate oder die zweite Durchflussrate Null ist, so dass Fluid intermittierend auf das Fahrzeugäußere in einer gepulsten Weise aufgebracht werden kann.

5. Fahrzeugwaschsystem nach Anspruch 1, wobei die erste Dauer gleich der zweiten Dauer ist.

6. Fahrzeugwaschsystem nach Anspruch 1, wobei die erste Dauer größer als die zweite Dauer ist.

7. Fahrzeugwaschsystem nach Anspruch 1, wobei die Steuerung (40) so konfiguriert ist, dass sie einen Standort eines Fahrzeugs innerhalb des Fahrzeugbehandlungsbereichs erkennt, und wobei die Steuerung (40) ferner so konfiguriert ist, dass sie den ersten Betriebszustand und den zweiten Betriebszustand auf der Grundlage des Standorts des Fahrzeugs implementiert.

8. Fahrzeugwaschsystem nach Anspruch 1, ferner umfassend eine Vielzahl von Fluidabgabeöffnungen und wobei die Fluidabgabeöffnungen jeweils ein Magnetventil enthalten können, das den Fluidstrom durch die Fluidabgabeöffnungen variiert.

9. Fahrzeugwaschsystem, umfassend:
- eine Fahrzeugbehandlungskomponente, die so konfiguriert ist, dass sie angrenzend an einen Fahrzeugbehandlungsbereich angeordnet wird;
- mindestens eine Fluidabgabeöffnung, die der Fahrzeugbehandlungskomponente zugeordnet und so konfiguriert ist, dass sie einen Fluidstrom daraus abgibt, wobei die mindestens eine Fluidabgabeöffnung mit einer Fluidquelle in Verbindung steht; und eine Steuerung (40), die mit der mindestens einen Fluidabgabeöffnung in Verbindung steht, wobei die Steuerung so konfiguriert ist, dass sie selektiv eine Durchflussrate des durch die mindestens eine Fluidabgabeöffnung fließenden Fluids variiert, während ein Fahrzeug angrenzend an den Fahrzeugbehandlungsbereich angeordnet ist; **dadurch gekennzeichnet, dass**
- die Steuerung (40) so konfiguriert ist, dass sie die Durchflussrate durch die Fluidabgabeöffnung auf der Grundlage einer erkannten Position eines Fahrzeugs in Bezug auf den Fahrzeugbehandlungsbereich variiert.
- wobei die Steuerung ferner so konfiguriert ist, dass sie eine Fluiddurchflussrate durch die mindestens eine Fluidabgabeöffnung zwischen einer maximalen vorbestimmten Durchflussrate und einer wählbaren zweiten Durchflussrate, die kleiner als die vorbestimmte maximale Durchflussrate ist, während eines einzelnen Waschvorgangs variiert.

10. Fahrzeugwaschsystem nach Anspruch 9, wobei die Steuerung (40) so konfiguriert ist, dass sie die Durchflussrate des Fluidstroms durch die mindestens eine Öffnung variiert, indem sie während eines ersten Zeitraums Fluid mit einer ersten Durchflussrate abgibt und dann während eines zweiten Zeitraums Fluid mit einer zweiten Durchflussrate abgibt.

11. Fahrzeugwaschsystem nach Anspruch 10, wobei der erste Zeitraum größer als der zweite Zeitraum ist, so dass der Fluidstrom durch die Fluidabgabeöffnung pulsiert werden kann.

12. Fahrzeugwaschsystem nach Anspruch 9, wobei entweder die erste Durchflussrate oder die zweite Durchflussrate Null ist.

13. Fahrzeugwaschsystem nach Anspruch 9, wobei die Steuerung (40) so konfiguriert ist, dass sie Fluid durch die mindestens eine Fluidabgabeöffnung mit einer ersten Rate zum Aufbringen auf einen vorderen Teil des Fahrzeugs und mit einer zweiten Rate zum Aufbringen auf einen hinteren Teil des Fahrzeugs abgibt;
wobei die zweite Rate größer ist als die erste Rate.

14. Methode zur Steuerung des Aufbringens einer Fahrzeugbehandlungsflüssigkeit als Teil eines Fahrzeugwaschprozesses, umfassend:
- Anordnen einer Fahrzeugbehandlungsvorrichtung angrenzend an einen Fahrzeugbehandlungsbereich;
- Zuführen eines unter Druck stehenden Fahrzeugbehandlungsfluids zur Fahrzeugbehandlungsvorrichtung;
- Bereitstellen mindestens einer Fluidabgabeöffnung, die eine vorbestimmte maximale Durchflussrate aufweist und mit dem unter Druck stehenden Fluid in Verbindung steht; **dadurch gekennzeichnet, dass** die Methode ferner umfasst:
- Zuordnen eines Ventils zu der mindestens einen Fluidabgabeöffnung; und Variieren der Fluiddurchflussrate durch die mindestens eine Fluidabgabeöffnung zwischen der maximalen vorbestimmten Durchflussrate und einer wählbaren zweiten Durchflussrate, die kleiner als die vorbestimmte maximale Durchflussrate ist.

15. Methode nach Anspruch 14, ferner umfassend:
- Abgeben von Fluid durch die mindestens eine Fluidabgabeöffnung mit der maximalen Durchflussrate für einen ersten Zeitraum;
- Abgeben von Fluid durch die mindestens eine Fluidabgabeöffnung mit der zweiten Durchflussrate für einen zweiten Zeitraum; und
- wobei der erste Zeitraum gleich dem zweiten Zeitraum ist.

## Revendications

1. Un système de lavage de véhicule, comprenant :
- un composant de traitement de véhicule configuré pour être disposé à côté d'une zone de traitement de véhicule pour traiter l'extérieur d'un véhicule ;
- au moins un orifice de distribution de fluide associé au composant de traitement du véhicule et en communication avec une source de fluide, un contrôleur (40) en communication avec le au moins un orifice de distribution de fluide et configuré pour faire fonctionner le au moins un orifice de distribution de fluide ayant un premier état de fonctionnement avec un premier débit et un second état de fonctionnement avec un deuxième débit, qui est différent du premier débit ;
**caractérisé en ce que**
- le contrôleur (40) est configuré pour faire varier sélectivement l'écoulement de fluide à travers le au moins un orifice de distribution de fluide entre les premier et second états de fonctionnement tandis qu'un véhicule est disposé dans la zone de traitement de véhicule à côté du composant de traitement de véhicule au cours d'un unique processus de lavage du véhicule ;
et **en ce que**
- Le au moins un orifice de distribution est capable de faire varier le débit de fluide entre un débit maximal prédéterminé et un second débit sélectionnable inférieur au débit maximal prédéterminé au cours d'un unique processus de lavage et
- dans lequel le contrôleur (40) est configuré pour mettre en oeuvre sélectivement le premier état de fonctionnement du au moins un orifice de distribution de fluide pendant une première durée et un deuxième état de fonctionnement du au moins un orifice de distribution de fluide pendant une seconde durée plusieurs fois au cours d'un unique processus de lavage d'un véhicule.

2. Le système de lavage de véhicule selon la revendication 1, dans lequel l'orifice de distribution de fluide est une buse (28).

3. Le système de lavage de véhicule selon la revendication 1, dans lequel le au moins un orifice de distribution de fluide est configuré de telle sorte que le premier débit est supérieur au second débit.

4. Le système de lavage de véhicule selon la revendication 1, dans lequel le au moins un orifice de distribution de fluide est configuré de telle sorte que le premier débit ou le second débit soit nul de sorte que le fluide puisse être appliqué par intermittence à l'extérieur du véhicule par impulsions.

5. Le système de lavage de véhicule selon la revendication 1, dans lequel la première durée est égale à la seconde durée.

6. Le système de lavage de véhicule selon la revendication 1, dans lequel la première durée est supérieure à la seconde durée.

7. Le système de lavage de véhicule selon la revendication 1, dans lequel le contrôleur (40) est configuré pour détecter un emplacement d'un véhicule dans la zone de traitement de véhicule et dans lequel le contrôleur (40) est en outre configuré pour mettre en oeuvre le premier état de fonctionnement et le second état de fonctionnement en fonction de l'emplacement du véhicule.

8. Le système de lavage de véhicule selon la revendication 1, comprenant en outre une pluralité d'orifices de distribution de fluide et dans lequel les orifices de distribution de fluide peuvent chacun comprendre une électrovanne qui fait varier l'écoulement de fluide à travers les orifices de distribution de fluide.

9. Un système de lavage de véhicule, comprenant :
- un composant de traitement de véhicule configuré pour être disposé à côté d'une zone de traitement de véhicule ;
- au moins un orifice de distribution de fluide associé au composant de traitement de véhicule et configuré pour distribuer un écoulement de fluide à partir de là, le au moins un orifice de distribution de fluide en communication avec une source de fluide ; et un contrôleur (40) en communication avec le au moins un orifice de distribution de fluide, le contrôleur étant configuré pour faire varier sélectivement un débit de fluide s'écoulant à travers le au moins un orifice de distribution de fluide pendant qu'un véhicule est disposé à côté de la zone de traitement de véhicule ; **caractérisé en ce que**
- le contrôleur (40) est configuré pour faire varier le débit à travers l'orifice de distribution de fluide en fonction d'un emplacement détecté d'un véhicule par rapport à la zone de traitement de véhicule.
- dans lequel le contrôleur est en outre configuré pour faire varier un débit d'écoulement de fluide à travers le au moins un orifice de distribution de fluide entre un débit maximum prédéterminé et un second débit sélectionnable inférieur au débit maximum prédéterminé au cours d'un unique processus de lavage.

10. Le système de lavage de véhicule selon la revendication 9, dans lequel le contrôleur (40) est configuré pour faire varier le débit d'écoulement du fluide à travers le au moins un orifice en délivrant le fluide à un premier débit pendant une première durée, puis en délivrant le fluide à un deuxième débit pendant une seconde durée.

11. Le système de lavage de véhicule selon la revendication 10, dans lequel la première durée est supérieure à la seconde durée de telle sorte que l'écoulement de fluide à travers l'orifice de distribution de fluide peut être pulsé.

12. Le système de lavage de véhicule selon la revendication 9, dans lequel le premier débit ou le second débit est nul.

13. Le système de lavage de véhicule selon la revendication 9, dans lequel le contrôleur (40) est configuré pour délivrer le fluide à travers le au moins un orifice de distribution de fluide à un premier débit pour une application sur une partie avant du véhicule et à un second débit pour une application sur une partie arrière du véhicule ;
dans lequel le second débit est supérieur au premier débit.

14. Une méthode de contrôle de l'application d'un fluide de traitement de véhicule dans le cadre d'un processus de lavage de véhicule engageant :
- la disposition d'un dispositif de traitement de véhicule à côté d'une zone de traitement de véhicule ; -
- la communication d'un fluide de traitement de véhicule sous pression au dispositif de traitement de véhicule ;
- la fourniture d'au moins un orifice de distribution de fluide ayant un débit maximal prédéterminé et en communication avec le fluide sous pression ; **caractérisé en ce que** la méthode comprend en outre :
- l'association d'une vanne à le au moins un orifice de distribution de fluide ; et la variation d'un débit d'écoulement de fluide à travers le au moins un orifice de distribution de fluide entre le débit maximum prédéterminé et un second débit sélectionnable inférieur au débit maximum prédéterminé au cours d'un unique processus de lavage.

15. La méthode selon la revendication 14, comprenant en outre :
- la distribution d'un fluide à travers le au moins un orifice de distribution de fluide au débit maximum au cours d'une première durée ;
- la distribution d'un fluide à travers le au moins un orifice de distribution de fluide au second débit au cours d'une deuxième durée ; et
- dans laquelle la première durée est égale à la seconde durée.
